# EUROPÄISCHE PATENTANMELDUNG

(11) **EP 3 076 633 A1**
(43) Veröffentlichungstag der Anmeldung: **05.10.2016**
(21) Anmeldenummer: 15162203.2
(22) Anmeldetag: 01.04.2015
(51) Int. Cl.: H04L 29/08, H04L 29/06

(54) **VERFAHREN ZUR KONFIGURATION EINES WEBSERVICE-GATEWAYS SOWIE WEBSERVICE-GATEWAY**

(71) Anmelder: Schneider Electric Industries SAS, 92500 Rueil-Malmaison (FR)
(72) Erfinder: Patri, Michael, 63741 Aschaffenburg (DE); Harnischfeger, Michael, 63776 Mömbris (DE)
(74) Vertreter: Stoffregen, Hans-Herbert

(57) **Zusammenfassung**

Die Erfindung bezieht sich auf ein Verfahren zur Konfiguration eines Webservice-Gateways sowie auf ein Gateway zur Transformation einer Webservice-Nachricht eines ersten Webservices eines Webservice-Servers oder eines Webservice-Clients eines ersten Netzwerks basierend auf einem Service-orientierten Protokoll, wie SOAP in eine Nachricht eines Servers oder Clients eines zweiten Netzwerks basierend auf einem standardisierten Protokoll wie OPC/UA und/oder umgekehrt, umfassend die Verfahrensschritte:
Laden einer Konfigurations-Datei in das Websemice-Gateway, umfassend Definitionen zur Transformation der Webservice-Nachricht in die Nachricht und/oder Definitionen zur Transformation der Nachricht in die Webservice-Nachricht sowie Generieren zumindest eines Transformations-Tools sowie von Transformationsregeln zur Transformation der zumindest einen Webservice-Nachricht in eine Nachricht und
umgekehrt auf der Basis der Konfigurations-Datei.

Zur Bereitstellung eines genelischen Gateways, welches Zugriff auf verschiedene Webservices mit unterschiedlichen Daten-Modellen und/oder Operationen erlaubt, ist vorgesehen, dass das Verfahren die weiteren Verfahrensschritte umfasst:
- Laden einer Webservice-Beschreibungsdatei als Konfigurations-Datei, wobei die Webservice-Beschreibungsdatei Definitionen zur Generierung einer Webservice-spezifischen Webservice-Schnittstelle sowie Definitionen eines Daten-Modells und/oder von Operationen eines weiteren Webservices umfasst,
- Generieren der spezifischen Webservice-Schnittstelle für den Webservice auf der Grundlage der zugehörigen Webservice-Beschreibungsdatei und
- Generieren von Webservice-spezifisch anwendbaren Transformationsregeln für Daten und Operationen des Webservices auf der Grundlage der Definitionen der Webservice-Beschreibungsdatei unter Berücksichtigung des Daten-Modells und der Operationen des weiteren Webservices.

## Beschreibung

Die Erfindung bezieht sich auf ein Verfahren zur Konfiguration eines Webservice-Gateways zur Transformation einer Webservice-Nachricht eines ersten Webservices eines Webservice-Servers oder eines Webservice-Clients eines ersten Netzwerks basierend auf einem Service-orientierten Protokoll, wie SOAP in eine Nachricht eines Servers oder Clients eines zweiten Netzwerks basierend auf einem standardisierten Protokoll wie OPC/UA und/oder umgekehrt, umfassend die Verfahrensschritte:
- Laden einer Konfigurations-Datei in das Webservice-Gateway, umfassend Definitionen zur Transformation der Webservice-Nachricht in die Nachricht und/oder Definitionen zur Transformation der Nachricht in die Webservice-Nachricht,
- Generieren zumindest eines Transformations-Tools sowie von Transformationsregeln zur Transformation der zumindest einen Webservice-Nachricht in eine Nachricht und umgekehrt auf der Basis der Konfigurations-Datei,
sowie auf ein Webservice-Gateway zur Transformation einer Webservice-Nachricht eines ersten Webservices eines Webservice-Servers oder eines Webservice-Clients eines ersten Netzwerks, basierend auf einem Service-orientierten Protokoll, wie SOAP in einer Nachricht eines Clients oder Servers eines zweiten Netzwerks, basierend auf einem standardisierten Protokoll wie OPC/UA und umgekehrt, umfassend eine Konfigurations-Schnittstelle zum Laden einer Konfigurations-Datei, welche zumindest Definitionen zur Transformation der Webservice-Nachricht des zumindest einen Webservices in eine Nachricht des Clients und umgekehrt enthält sowie Mittel zum Generieren eines Transformations-Tools mit Transformationsregeln zur Transformation der zumindest einen Webservice-Nachricht in eine Nachricht des standardisierten Protokolls und umgekehrt.

Ein Verfahren zur Konfiguration eines Webservice-Gateways sowie ein Webservice-Gateway sind in der US 2010/0312863 A1 beschrieben. Das beschriebene Gateway ist ausgebildet, um zumindest einen SOAP/XML-basierten Webservice für zumindest einen RPC-Client zugänglich zu machen. Hierzu ist zumindest eine Mapping-Datei vorgesehen, welche Definitionen zur Übersetzung zumindest einer ersten RPC-Anfrage-Nachricht von dem zumindest einen RPC-Client in zumindest einen Service-Aufruf für den zumindest einen SOAP/XML-basierten Webservice umfasst.

Das Gateway umfasst eine Konfigurations-Schnittstelle, die zum Empfang und zum Speichern von zumindest einer Mapping-Datei in einem Speichermedium ausgebildet ist. Das Gateway ist des Weiteren ausgebildet, um zumindest ein erstes Unterprogramm zu generieren, welches zur Verarbeitung der zumindest einen ersten RPC-Anfrage-Nachricht im Zusammenhang mit der zumindest einen Mapping-Datei ausgebildet ist.

Des Weiteren ist die Konfigurations-Schnittstelle des Gateways ausgebildet, um zumindest eine aktualisierte Mapping-Datei zu empfangen und zum Überschreiben der entsprechenden zumindest einen Original-Mapping-Datei, ohne die Verarbeitung des zumindest einen ersten Unterprogramms zu beeinflussen.

Das aus dem Stand der Technik bekannte Verfahren ermöglicht eine einfache Konfiguration des Gateways während dieses betriebsbereit bleibt.

Das Gateway bezieht sich jedoch auf einen SOAP/XML-basierenden Webservice mit festem Protokoll, wie z. B. SOAP, und festgelegten Methoden, d. h. Funktionen und Operationen. Bei dem bekannten Webservice-Gateway existiert eine Webservice-Schnittstelle, die während des Betriebs fest vorgegeben ist.

Mit anderen Worten ist das Verfahren nach dem Stand der Technik auf die Konfiguration, d. h. die Anpassung und Transformationsregeln eines bestimmten Webservice-Typs beschränkt.

Davon ausgehend liegt der vorliegenden Erfindung die Aufgabe zu Grunde, ein Verfahren zur Konfiguration eines Webservice-Gateways sowie ein Webservice-Gateway der eingangs genannten Art derart weiterzubilden, dass ein generisches Webservice-Gateway bereitgestellt wird, welches einen Zugriff auf verschiedenartige Webservices mit unterschiedlichen Protokollen, Daten-Modellen und/oder Methoden erlaubt.

Die Aufgabe wird verfahrensmäßig erfindungsgemäß dadurch gelöst, dass das Verfahren die weiteren Verfahrensschritte umfasst:
- Laden einer Webservice-Beschreibungsdatei als Konfigurations-Datei, wobei die Webservice-Beschreibungsdatei Definitionen zur Generierung einer Webservice-spezifischen Webservice-Schnittstelle sowie Definitionen eines Daten-Modells und/oder von Operationen eines weiteren Webservices umfasst,
- Generieren der spezifischen Webservice-Schnittstelle für den weiteren Webservice auf der Grundlage der zugehörigen Webservice-Beschreibungsdatei und
- Generieren von Webservice-spezifisch anwendbaren Transformationsregeln für Daten und Operationen des weiteren Webservices auf der Grundlage der Definitionen der Webservice-Beschreibungsdatei unter Berücksichtigung des Daten-Modells und der Operationen des Webservices.

Dabei wird eine WSDL-Datei als Konfigurations-Datei geladen, wobei die WSDL-Datei Definitionen zur Generierung einer spezifischen Webservice-Schnittstelle sowie Definitionen eines Daten-Modells und/oder von Operationen des Webservices umfasst. Die zumindest eine Webservice-Schnittstelle für den Webservice wird auf der Grundlage der zugehörigen WSDL-Datei generiert und spezifisch anwendbare Transformationsregeln für Daten und Operationen des Webservices werden auf der Grundlage der Definitionen der WSDL-Datei unter Berücksichtigung des Daten-Modells und der Methoden des Webservices erzeugt.

Das Verfahren zeichnet sich gegenüber dem Stand der Technik dadurch aus, dass verschiedene Webservices, d. h., Webservices mit verschiedenen Protokollen und/oder mit unterschiedlichen Methoden für Service-Clients mit standardisiertem Service-Protokoll zugänglich sind. Mit anderen Worten: es wird ein generisches Webservice-Gateway zur Verfügung gestellt, welches einfach in eine bestehende Webservice-Architektur integrierbar ist.

Das erfindungsgemäße Verfahren ermöglicht die Transformation jedes Webservices auf Services eines standardisierten Protokolls mit standardisiertem Daten-Modell und standardisierten Methoden. Folglich kann durch das erfindungsgemäße Verfahren jeder Service mit offenem Daten-Modell und offenen Operationen auf einen standardisierten Service transformiert bzw. gemappt werden.

Gemäß einer bevorzugten Verfahrensweise ist vorgesehen, dass das Laden der Webservice-Beschreibungsdaten wie WSDL-Datei und die Generierung der Webservice-Schnittstelle sowie der allgemeinen gültigen/definierten und/oder spezifisch anwendbaren Transformationsregeln für Daten und Methoden zur Ladezeit erfolgt.

Gemäß einer weiteren bevorzugten Verfahrensweise ist vorgesehen, dass das Laden der WSDL-Datei und das Generieren der Webservice-Schnittstelle auf Anfrage des Service-Clients initiiert werden.

Sofern die WSDL-Dateien die zur Transformation der Daten und/oder Methoden notwendigen allgemeinen Definitionen nicht ausreichend enthalten, ist vorgesehen, dass eine Webservice-spezifische Konfigurations-Datei geladen wird, auf deren Basis Webservice-spezifische erweiterte Transformationsregeln generiert werden.

Die WSDL-Datei und /oder die erweiterte Konfigurations-Datei kann entweder automatisiert über die Konfigurations-Schnittstelle des Webservice-Gateways unter Verwendung einer Webservice-Hostadresse des benötigten Webservices oder manuell geladen werden.

Die Aufgabe wird erfindungsgemäß u. a. dadurch gelöst, dass die Konfigurations-Schnittstelle ausgebildet ist, um eine Webservice-Beschreibungsdatei als Konfigurations-Datei zu laden, wobei die Webservice-Beschreibungsdatei Definitionen zur Generierung einer Webservice-spezifischen Webservice-Schnittstelle sowie Definitionen eines Daten-Modells und/oder von Operationen eines weiteren Webservices umfasst und dass das Webservice-Gateway Mittel zum Generieren der spezifischen Webservice-Schnittstelle auf der Grundlage der Webservice-zugehörigen Webservice-Beschreibungsdatei sowie Mittel zum Generieren von Webservice-spezifisch anwendbaren Transformationsregeln für Daten und Operationen des Webservices auf der Grundlage der Definition der Weberservice- Beschreibungsdatei unter Berücksichtigung eines Daten-Modells und Operationen des weiteren Webservices umfasst.

Es ist vorgesehen, dass die Konfigurations-Schnittstelle ausgebildet ist, um eine WSDL-Datei als Konfigurations-Datei zu lesen, wobei die WSDL-Datei Definitionen zur Generierung einer Webservice-Schnittstelle sowie Definitionen eines Daten-Modells und/oder von Methoden des Webservices umfasst. Ferner weist das Webservice-Gateway Mittel zum Generieren einer spezifischen Webservice-Schnittstelle für den Webservice auf der Grundlage der zugehörigen WSDL-Datei sowie Mittel zum Generieren von Webservice-spezifischen anwendbaren Transformationsregeln für Daten und Methoden des Webservices auf der Grundlage der Definitionen der WSDL-Datei unter Berücksichtigung eines Datenmodells und der Methoden des Webservices auf.

Durch das erfindungsgemäße Webservice-Gateway wird ein generisches Gateway bereitgestellt, welches derart konfigurierbar ist, dass Webservices mit offenem Daten-Modell und offenen Methoden eines ersten Protokolls für Services mit standardisierten Daten-Modellen und Methoden eines zweiten Protokolls zugänglich sind. Folglich wird die Möglichkeit eröffnet, dass OPC/UA - Clients, wie z. B. SCADA-Anwendungen einer Bedienebene im Stande sind, Webservices von Webservice-Servern in Form von Geräten und Software-Applikationen einer Steuerungsebene anzufordern.

Des Weiteren können Webservice-Clients, wie z. B "AMPLA" mit "EcoStructure Webservice" Daten von einem OPC/UA-Server, wie z. B. Open-Factory-Server (OFS), anfordern.

Auch können mobile Endgeräte standardisierte UPC/UA-Client-Applikationen nutzen, um Daten von einem bekannten Webservice-Interface anzufordern.

Um einen dynamischen Betrieb zu ermöglichen ist vorgesehen, dass die Konfigurations-Schnittstelle ausgebildet ist, um die zumindest eine WSDL-Datei während der Laufzeit des Webservice-Gateways zu laden und dass das Mittel zur Generierung der Webservice-Schnittstelle so ausgebildet ist, dass die Webservice-Schnittstelle während der Laufzeit generiert wird.

Um eine Kommunikation mit unterschiedlichen Webservices zu ermöglichen, ist vorgesehen, dass das Webservice-Gateway mehrere Webservice-Schnittstellen für Webservices verschiedener Protokolle, verschiedener Daten-Modelle und/oder verschiedener Operationen aufweist.

Eine bevorzugte Ausführungsform sieht vor, dass ein standardisiertes Datenmodell und standardisierte Methoden, wie Funktion/Operation des zweiten Netzwerks in den Webservice-Gateways fest implementiert, d. h. hartcodiert sind.

Des Weiteren ist vorgesehen, dass die Transformationsregeln für die Daten-Modelle und/oder die Methoden (Funktion/Operationen) in einem Speicher des Webservice-Gateways oder einem externen Speicher abgelegt sind.

Die Transformation der Protokolle, Daten und/oder Methoden kann durch zyklische Datenaktualisierung in einem Cache-Speicher durchgeführt werden (Cached-Verfahren).

Alternativ besteht die Möglichkeit, dass die Protokolle, Daten und/oder Methoden "On-the-Fly", d. h. ohne Transformation, direkt weitergeleitet werden.

Unabhängig davon kann die Transformation der Protokolle, Methoden und/oder Daten auch in einem Hybrid-Verfahren, d. h. einer Kombination des "Cached-Verfahrens" und des "On-the-Fly-Verfahrens" durchgeführt werden.

Weitere Einzelheiten, Vorteile und Merkmale der Erfindung ergeben sich nicht nur aus den Ansprüchen, den diesen zu entnehmenden Merkmalen - für sich und/oder in Kombination -sondern auch aus der nachfolgenden Beschreibung eines der Figuren zu entnehmenden bevorzugten Ausführungsbeispiels.

Es zeigen:
- Fig. 1: eine schematische Darstellung einer Webservice-Gateway-Kommunikation,
- Fig. 2: eine schematische Darstellung des erfindungsgemäßen Webservice-Gateways,
- Fig. 3: eine schematische Darstellung verschiedener Typen von Mapping-Verfahren und
- Fig. 4: eine schematische Darstellung eines Webservice-Gateway-Systems.

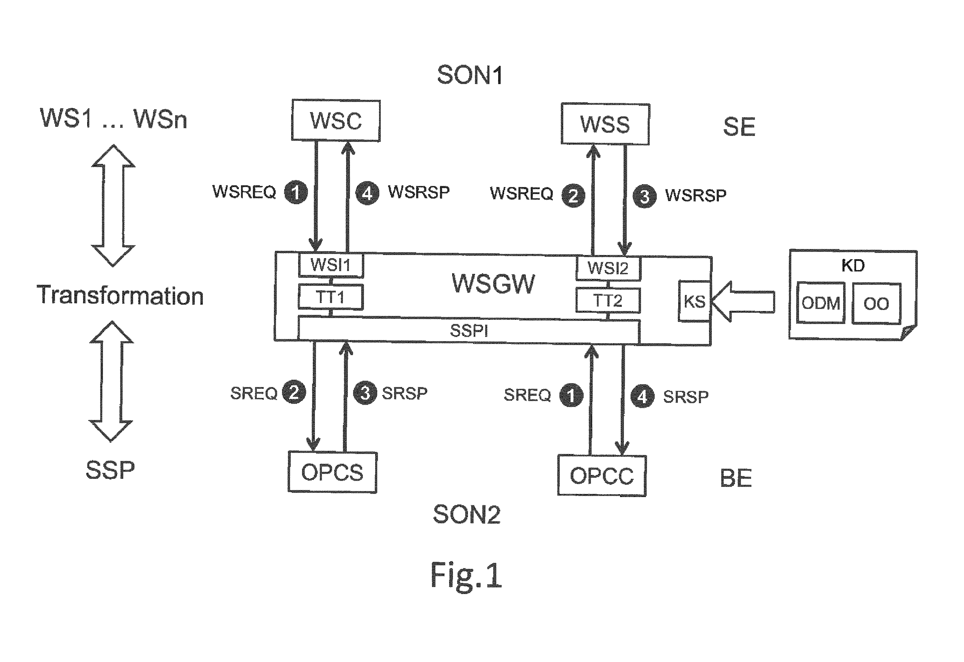

Fig. 1 zeigt ein Gateway WSGW, insbesondere Webservice-Gateway, zur Bereitstellung eines Zugriffs auf zumindest einen Webservice WS1 ... WSn zumindest eines Webservice-Servers WSS eines ersten Netzwerkes SON1 einer Steuerungsebene SE basierend auf einem Service-orientierten Protokoll WSP, wie SOAP durch zumindest einen Service-Client OPCC eines zweiten Netzwerkes SON2 mit standardisiertem Service-Protokoll SSP wie OPC/UA einer Bedienebene BE.

Ferner bietet das Webservice-Gateway WSGW auch Zugriff auf zumindest einen Service eines Service-Servers OPCS des zweiten Netzwerkes SON2 durch zumindest einen Webservice-Client WSC des ersten Service-orientierten Netzwerkes SON1.

Das Webservice-Gateway WSGW ist als generisches Gateway ausgebildet, welches während der Laufzeit frei konfigurierbar ist. Hierzu ist eine Konfigurations-Schnittstelle zum Laden einer Konfigurations-Datei KD vorgesehen, welche zumindest Definitionen zur Transformation einer Webservice-Nachricht WSREQ, WSRSP des zumindest einen Webservices WS1 ... WSn in eine Service-Nachricht SREQ, SRSP des Service-Clients OPCC enthält. Ferner umfasst das Webservice-Gateway WSGW zumindest ein Transformations-Tool TT1 ... TTn sowie Transformationsregeln TR, ATR, DTR zur Transformation der zumindest einen Webservice-Nachricht WSREQ, WSRSP in die Service-Nachricht SREQ, SRSP.

Gemäß der Erfindung ist vorgesehen, dass die Konfigurations-Schnittstelle KS des Webservice-Gateways WSGW ausgebildet ist, um eine Webservice-Beschreibungsdatei als Konfigurationsdatei KD zu laden, wobei die Webservice-Beschreibungsdatei Definitionen zur Generierung einer Webservice-spezifischen Webservice-Schnittstelle WSI1 ...WSIn sowie Definitionen des verwendeten Daten-Modells ODM und/oder der verwendeten Operationen OO des Webservices WS1 ... WSn umfasst. Auf der Grundlage der Webservice-Beschreibungsdatei KD können somit einerseits die Transformationsregeln ETR, ATR sowie Webservice-spezifische Webservice-Schnittstellen wie WSI1 ... WSIn generiert werden.

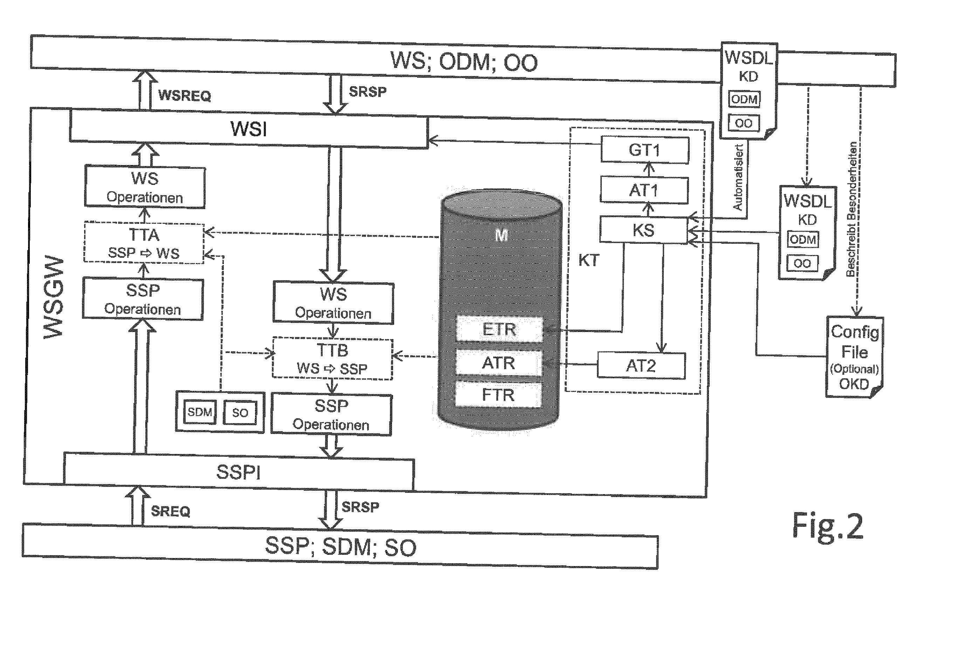

Fig. 2 zeigt in schematischer Darstellung eine detaillierte Struktur des Webservice-Gateways WSGW zur Transformation von Webservices WS1 ... WSn, basierend auf einem festgelegtes Protokoll WSP, wie z. B. SOAP, jedoch mit verschiedenen Daten-Modellen ODM und verschiedenen Operationen OO in Services mit einem standardisierten Daten-Modell SDM sowie standardisierten Operationen SO, basierend auf einem standardisierten Protokoll SSP wie OPC/UA.

Das Webservice- Gateway WSGW umfasst ein Konfigurations-Tool KT zum Laden der Konfigurations-Datei KD, zur Erzeugung der zumindest einen Webservice-Schnittstelle WSI1 ... WSIn sowie zur Generierung von Transformationsregeln ATR, ETR. Das Konfigurations-Tool KT umfasst die Konfigurationsschnittstelle KS zum automatisierten oder manuellen Laden der Konfigurationsdatei KD, die im beschriebenen Beispiel eine Webservice-Beschreibungs-Datei, wie WSDL-Datei ist, welche das verwendete Daten-Modell ODM sowie die verwendeten Operationen OE des Webservices WS beschreibt. Nach dem Laden der Konfigurationsdatei KD wird diese in einem ersten Analyse-Tool AT1 analysiert und anschließend wird mittels eines Generator-Tools GT die Webservice-spezifische Webservice-Schnittstelle WSI für den Webservice WS generiert.

Das Konfigurations-Tool KT umfasst des Weiteren ein zweites Analyse-Tool AT2, welches ausgebildet ist, um die Konfigurations-Datei KD zu analysieren und Webservice-spezifisch anwendbare Transformationsregeln ATR zu generieren bzw. zu definieren und in einem Speichermedium M zu speichern.

Sollten die Webservice-spezifisch anwendbaren Transformationsregeln ATR aufgrund von Besonderheiten des Daten-Modells bzw. der Operationen des Webservices zur Durchführung einer Transformation nicht ausreichen, kann ergänzend eine optionale Konfigurations-Datei OKD über die Konfigurations-Schnittstelle geladen und in das Speichermedium M als erweiterte Transformationsregeln ETR geladen werden.

Unabhängig davon sind in dem Speichermedium M auch fest definierte Transformationsregeln FTR gespeichert.

Auf der Grundlage der Transformationsregeln ATR, ETR, in denen bereits das Webservice-spezifische Daten-Modell sowie die Webservice-spezifischen Operationen berücksichtigt sind, wird unter Berücksichtigung des standardisierten Daten-Modells SDM sowie der standardisierten Operationen SO der standardisierten Services die Transformations-Tools TTA, TTB generiert, wobei das Transformations-Tool TTA zur Transformation des standardisierten Service-Protokolls in das Webservice-Protokoll und das Transformations-Tool TTB zur Transformation des Webservice-Protokolls in das standardisierte Service-Protokoll SSP zuständig ist.

Nach Abschluss der Konfiguration arbeitet das Webservice-Gateway WSGW wie folgt: Der OPC/UA-Client OPCC, beispielsweise in einer SCADA-Anwendung, sendet eine Service-Anfrage SREQ über die standardisierte Service-Protokoll-Schnittstelle SSPI an das Webservice-Gateway WSGW. Mittels des Transformations-Tools TTA werden unter Berücksichtigung der Webservice-spezifischen Transformationsregeln ATR sowie der fest definierten bzw. konfigurierten Transformationsregeln FTR die Operationen und Daten des standardisierten Services in Operationen und Daten des Webservices transformiert, welche über die Webservice-spezifische Webservice-Schnittstelle WSI als Webservice-Anfrage WSREQ an den Webservice-Server WSS weitergeleitet werden.

Der Webservice-Server WSS antwortet mit einem Webservice-Request WSRSP, der über die Webservice-Schnittstelle WSI von dem Webservice-Gateway WSGW empfangen wird. Durch das Transformations-Tool TTB werden die Daten und/oder Operationen des Webservice-Request WSRSP in Daten und/oder Operationen des standardisierten Services übersetzt und über die standardisierte Service-Protokoll-Schnittstelle SSPI als Service-Request SRRSP an den OPC/UA-Client übertragen.

Für den Fall, dass für einen Service-Request SRC eines OPC/UA-Clients eine entsprechende Webservice-Schnittstelle in dem Webservice-Gateway nicht definiert ist oder für den Fall, dass in der Steuerungsebene SE ein neuer Webservice zur Verfügung gestellt wird, kann über das Konfigurations-Tool KT automatisiert eine entsprechende Webservice-Beschreibungsdatei KD als Webservice-spezifische WSDL-Datei geladen werden, auf deren Grundlage dann eine Webservice-spezifische Webservice-Schnittstelle WSI sowie Webservice-spezifisch anwendbare Transformationsegeln ATR generiert werden können. Dieser Vorgang kann während des Betriebs des Webservice-Gateways WSGW durchgeführt werden.

Nach Abschluss der Konfiguration kann der neue Webservice sodann über die Webservice-spezifische Webservice-Schnittstelle WSI durch den Service-Client angefragt werden.

Die Transformation der Protokolle, Daten und/oder Operationen kann auf verschiedene Weisen durchgeführt werden. Die definierten Transformationsregeln FTR, die in der Regel in das Webservice-Gateway hard-coded implementiert sind, können beispielsweise verwendet werden, um einen standardisierten Webservice zu transformieren.

Gemäß der Erfindung besteht die Möglichkeit, eine Transformation auf der Grundlage von allgemeingültigen Transformationsregeln und der Webservice-Beschreibungsdatei durchzuführen. Dabei sind in der Webservice-Beschreibungsdatei, z. B. einer WSDL-Datei (XML-Datei), Syntax und Form der Daten und/oder Operationen definiert.

Dabei gelten folgende Voraussetzungen:
1. Webservice-Operations-Name startet mit bekanntem Präfix, wie z. B. "Get" oder "Set".
2. Typ-Parameter für Operationen "IN"/"OUT" sind bekannt.
3. Die Semantik der Operation ist definiert, z. B. "get variable" antwortet mit einem Variablen-Wert, basierend auf dem Variablen-Identifier.

Die bekannte Syntax und Form ermöglicht die Definition von sogen. Templates.

### Beispiel:

| GetVariable | SetVariable |
|---|---|
| {IN. VarName | { IN: VarName |
| OUT VarValue | IN: VarValue |
| } | } |
| 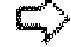 Read Template | 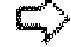 Write Template |

Das Template definiert Syntax, Form und Semantik.
Syntax: "Präfix" oder Name der Operation
Form: wie viele und welche Art von Parametern
Semantik: welche Parameter ist z. B. ID, Value, Error Code, etc.

### Beispiel:

| | |
|---|---|
| Get... | |
| {IN Param1 | 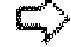 ID |
| OUT Param2 | 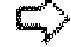 Value |
| OUT Param3 | 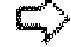 Error Code |
| } | |
| 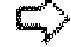 Read Template with 3 parameters | |

Eine weitere Art der Transformation verwendet die standardisierten Transformationsregeln FTR, die aus der Webservice-Beschreibungsdatei generierten Transformationsregeln ATR sowie die aus der optionalen Konfigurationsdatei OKD abgeleiteten erweiterten Transformationsregeln ETR. Eine derartige Transformation wird bei einer offenen WSDL-Datei verwendet, d. h., es existieren keine Limitierungen betreffend Syntax und Form der Daten und/oder Operationen.

Die optionale Konfigurationsdate OKD wird insbesondere dann benötigt, wenn eine Webservice-Operation mit den standardmäßig definierten Templates nicht abgebildet werden kann.

Existierende Templates können verwendet werden, beispielsweise für fest definierte Funktionalitäten, adaptierte Operationsnamen sowie Anweisung von Parametern.

### Beispiel:

### Adaptierter Operationsname:

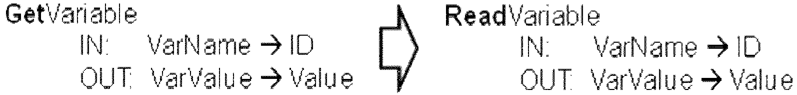

### Anweisung von Parametern:

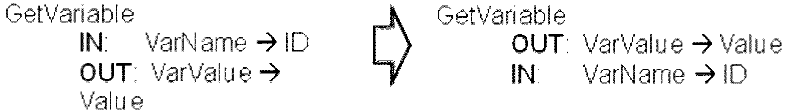

Existierende Templates müssen erweitert werden, wenn z. B. Parameter ergänzt werden, der Variablen-Bezeichnungsteil erweitert wird und/oder Funktionalität und Semantik adaptiert werden.

### Beispiel:

### Ergänzung von Parametern:

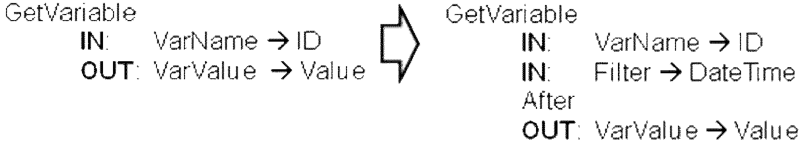

Unabhängig davon können auch neue Templates definiert werden.

### Beispiel:

| DoSomething | |
|---|---|
| **IN:** | Param1 → ID1 |
| **IN:** | Param2 → ID2 |
| **IN:** | Param3 → ID3 |
| **OUT:** | Value1 → Value1 |
| **OUT:** | Value2 → Value2 |
| **OUT:** | \/alue3 → Value3 |

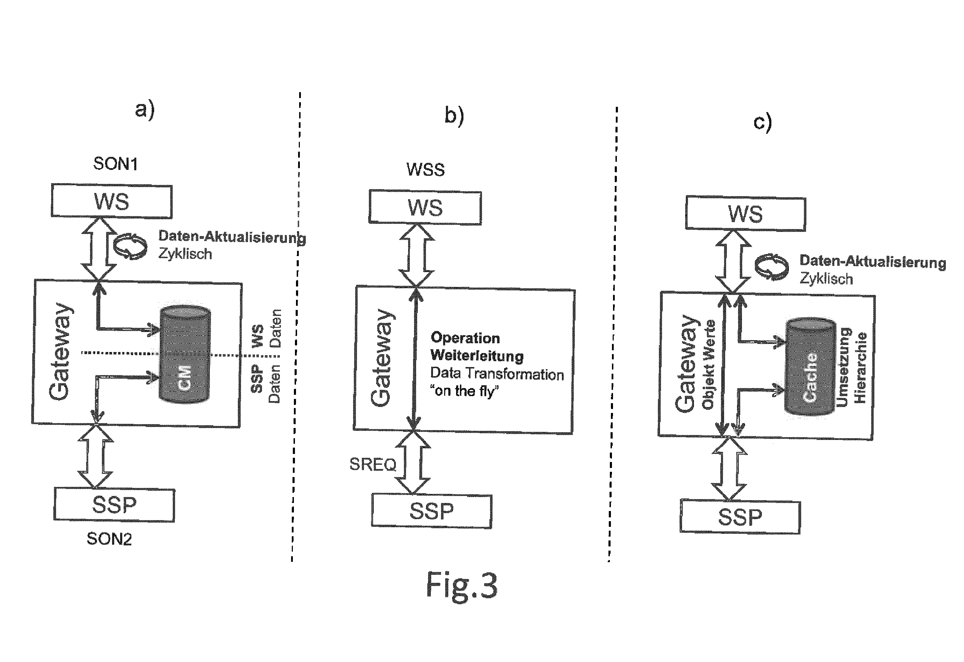

Fig. 3 zeigt verschiedene Optionen der Transformation von Protokollen, Daten und/oder Operationen durch das Webservice-Gateway WSGW.

Gemäß der in Fig. 3a dargestellten Option "Cached" besteht zwischen der Webservice-Architektur des Service-orientierten Netzwerkes SNO1 und der Service-Protokoll-Architektur des Service-orientierten Netzwerkes SON2 keine direkte Verbindung. Vielmehr werden die Webservice-Daten sowie die Service-Protokoll-Daten in einem Cache-Speicher CM zwischengespeichert. Die Daten werden in dem Cache-Speicher CM vorgehalten, wobei keine Protokoll-Transformation, sondern nur eine Daten-Transformation erfolgt. Zwischen den Webservices bzw. den Services und dem Cache-Speicher werden die Daten zyklisch aktualisiert.

Fig. 3b zeigt ein "On-the-Fly"- Transformationsverfahren, wobei eine Webservice-Anfrage SREQ direkt an den Webservice-Server WSS weitergeleitet wird. Bei diesem Verfahren werden sowohl die Daten als auch das Protokoll transformiert.

Fig. 3c zeigt eine Kombination aus dem "Cached"-Verfahren und dem "On-the-Fly"-Verfahren gemäß Fig. 3a und 3b, wobei z. B. auf zeitkritische Daten wie Objekt-Variablen direkt "on-the-Fly" zugegriffen werden kann, und auf andere Daten "gecached" zugegriffen wird.

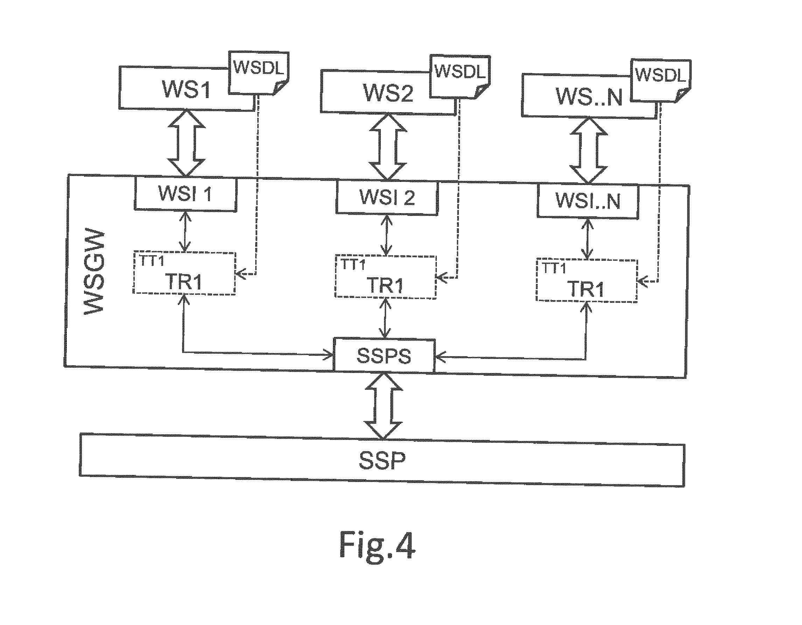

Fig. 4 zeigt eine Ausführungsform eines Webservice-Gateways WSGW mit einer Vielzahl von Webservice-Schnittstellen WSI1 ... WSIn zum Zugriff auf eine Vielzahl von unterschiedlichen Webservices WS1 ... WSn. Jeder Webservice-Schnittstelle WSI1 ... WSIN ist ein Transformations-Tool TT1 ... TTn zugeordnet, mit Transformationsregeln TR1 ... TRn, die auf der Basis der Webservice-spezifischen WSDL-Datei generiert wurden.

Durch die beschriebene Ausführungsform des Webservice-Gateways WSGW besteht die Möglichkeit, von einem Service-Client OPCC über das standardisierte Service-Protokoll SSP und die standardisierte Service-Protokoll-Schnittstelle SSPI auf die verschiedenen Webservices WS 1 ... WSn zuzugreifen und umgekehrt.

## Patentansprüche

1. Verfahren zur Konfiguration eines Webservice-Gateways zur Transformation einer Webservice-Nachricht eines ersten Webservices eines Webservice-Servers oder eines Webservice-Clients eines ersten Netzwerks basierend auf einem Service-orientierten Protokoll, wie SOAP in eine Nachricht eines Servers oder Clients eines zweiten Netzwerks basierend auf einem standardisierten Protokoll wie OPC/UA und/oder umgekehrt, umfassend die Verfahrensschritte:
- Laden einer Konfigurations-Datei in das Webservice-Gateway, umfassend Definitionen zur Transformation der Webservice-Nachricht in die Nachricht und/oder Definitionen zur Transformation der Nachricht in die Webservice-Nachricht,
- Generieren zumindest eines Transformations-Tools sowie von Transformationsregeln zur Transformation der zumindest einen Webservice-Nachricht in eine Nachricht und umgekehrt auf der Basis der Konfigurations-Datei,
**dadurch gekennzeichnet ,**
**dass** das Verfahren die weiteren Verfahrensschritte umfasst:
- Laden einer Webservice-Beschreibungsdatei als Konfigurations-Datei, wobei die Webservice-Beschreibungsdatei Definitionen zur Generierung einer Webservice-spezifischen Webservice-Schnittstelle sowie Definitionen eines Daten-Modells und/oder von Operationen eines weiteren Webservices umfasst,
- Generieren der spezifischen Webservice-Schnittstelle für den weiteren Webservice auf der Grundlage der zugehörigen Webservice-Beschreibungsdatei und
- Generieren von Webservice-spezifisch anwendbaren Transformationsregeln für Daten und Operationen des weiteren Webservices auf der Grundlage der Definitionen der Webservice-Beschreibungsdatei unter Berücksichtigung des Daten-Modells und der Operationen des Webservices.

2. Verfahren nach Anspruch 1,
**dadurch gekennzeichnet ,**
**dass** das Laden der Webservice-Beschreibungsdatei und die Generierung der Webservice-Schnittstelle und/oder die Generierung der Webservice-spezifisch anwendbaren Transformationsregeln für Daten und Operationen zur Laufzeit erfolgen.

3. Verfahren nach Anspruch 1 oder 2,
**dadurch gekennzeichnet ,**
**dass** das Laden der Webservice-Beschreibungsdatei und das Generieren einer Webservice-Schnittstelle auf Anfrage des Gateways oder des Service-Clients initiiert werden.

4. Verfahren nach zumindest einem der vorhergehenden Ansprüche,
**dadurch gekennzeichnet ,**
**dass** zur Generierung von Webservice-spezifischen erweiterten Transformationsregeln eine Webservice-spezifisch erweiterte Konfigurationsdatei vorzugsweise zur Laufzeit geladen wird.

5. Verfahren nach zumindest einem der vorhergehenden Ansprüche,
**dadurch gekennzeichnet ,**
**dass** die Webservice-Beschreibungsdatei und/oder die erweiterte Konfigurations-Datei automatisiert über eine Konfigurations-Schnittstelle des Webservice-Gateways unter Verwendung einer Webservice-Hostadresse des benötigten Webservices geladen werden.

6. Verfahren nach zumindest einem der vorhergehenden Ansprüche,
**dadurch gekennzeichnet ,**
**dass** die Webservice-Beschreibungsdatei und/oder die erweiterte Konfigurations-Datei manuell geladen werden.

7. Verfahren nach zumindest einem der vorhergehenden Ansprüche,
**dadurch gekennzeichnet ,**
**dass** als Webservice-Beschreibungsdatei eine WSDL-Datei geladen wird.

8. Webservice-Gateway (WSGW) zur Transformation einer Webservice-Nachricht (WSRE2, WSRESP) eines ersten Webservices (WS) eines Webservice-Servers (WSS) oder eines Webservice-Clients (WSC) eines ersten Netzwerks (SON1), basierend auf einem Service-orientierten Protokoll, wie SOAP in einer Nachricht (SREQ), SR5P) eines Clients (OPCC) oder Servers (OPCS) eines zweiten Netzwerks (SON2), basierend auf einem standardisierten Protokoll wie OPC/UA und umgekehrt, umfassend eine Konfigurations-Schnittstelle (KS) zum Laden einer Konfigurations-Datei (KD), welche zumindest Definitionen zur Transformation der Webservice-Nachricht (WSREQ, WSRSP) des zumindest einen Webservices (WS) in eine Nachricht (SREQ, SRSP) des Clients (OPCC) und umgekehrt enthält sowie Mittel (KT) zum Generieren eines Transformations-Tools (TTA, TTB) mit Transformationsregeln (ETR, ATR, FTR) zur Transformation der zumindest einen Webservice-Nachricht (WSRE2, WSRSP) in eine Nachricht des standardisierten Protokolls und umgekehrt,
**dadurch gekennzeichnet ,**
**dass** die Konfigurations-Schnittstelle (KS) ausgebildet ist, um eine Webservice-Beschreibungsdatei (WSDL) als Konfigurations-Datei zu laden, wobei die Webservice-Beschreibungsdatei (WSDL) Definitionen zur Generierung einer Webservice-spezifischen Webservice-Schnittstelle (WSI) sowie Definitionen eines Daten-Modells /ODM) und/oder von Operationen (OD) eines weiteren Webservices (WS) umfasst,
**dass** das Webservice-Gateway (WSGW) Mittel zum Generieren der spezifischen Webservice-Schnittstelle (WS) auf der Grundlage der Webservice-zugehörigen Webservice-Beschreibungsdatei sowie Mittel zum Generieren von Webservice-spezifisch anwendbaren Transformationsregeln (ATR) für Daten und Operationen des Webservices (WS) auf der Grundlage der Definition der Weberservice-Beschreibungsdatei unter Berücksichtigung eines Daten-Modells und Operationen des weiteren Webservices umfasst.

9. Webservice-Gateway nach Anspruch 8,
**dadurch gekennzeichnet ,**
**dass** die Konfigurations-Schnittstelle (KS) ausgebildet ist, um die zumindest eine Webservice-Beschreibungsdatei (WSDL) während der Laufzeit zu laden und dass das Mittel (AT1, GT1) zur Generierung der Webservice-Schnittstelle (WS) ausgebildet ist, die Webservice-Schnittstelle (WS) während der Laufzeit zu generieren.

10. Weberservice-Gateway nach Anspruch 8 oder 9,
**dadurch gekennzeichnet ,**
**dass** das Webservice-Gateway (WSGW) mehrere Webservice-Schnittstellen (WSI1, ... WSIn) aufweist.

11. Webservice-Gateway nach einem der Ansprüche 8 bis 10,
**dadurch gekennzeichnet ,**
**dass** das Webservice-Gateway (WSGW) mehrere Webservice-Schnittstellen (WSI1, ..., WSIn) für Webservices (WS1, ..., WSn) verschiedener Protokolle und/oder verschiedener Funktionen und/oder Operationen aufweist.

12. Webservice-Gateway nach einem der Ansprüche 8 bis 11,
**dadurch gekennzeichnet ,**
**dass** Definitionen eines Daten-Modells und/oder von Operationen der Services des standardisierten Protokolls fest in dem Webservice-Gateway implementiert sind.
